# FASCICULE DE BREVET EUROPEEN

(11) **EP 3 094 564 B1**
(45) Date de publication et mention de la délivrance du brevet: **06.03.2019**
(21) Numéro de dépôt: 15704042.9
(22) Date de dépôt: 13.01.2015
(51) Int. Cl.: B65B 13/10, B65B 13/18, B65B 13/26, B65B 61/20, B65C 3/02, B65C 7/00, A01G 5/02, B65B 27/10

(54) **DISPOSITIF DE FICELAGE AMÉLIORÉ**
VERBESSERTERE BINDEVORRICHTUNG
IMPROVED BINDING APPARATUS

(30) Priorité: 13.01.2014 FR 1450253
(43) Date de publication de la demande: 23.11.2016
(73) Titulaire: Ateliers De Recherches Et Conceptions A.R.C., 76550 Offranville (FR)
(72) Inventeur: LECHEVALIER, Eric, F-76119 Varengeville sur Mer (FR)
(74) Mandataire: Cabinet Netter
(86) Numéro de dépôt international: PCT/FR2015/050069
(87) Numéro de publication internationale: WO 2015/104516

(56) Documents cités:
- FR-A1- 2 790 732
- JP-A- H09 267 806
- NL-C- 2 007 872

## Description

L'invention relève du domaine du conditionnement d'articles, en particulier par ficelage.

Le ficelage consiste, de manière générale, à placer un lien autour d'un article de manière à former une ou plusieurs boucles, et à fermer les boucles au moyen d'un ou plusieurs noeuds en maintenant le lien serré contre l'article.

Le ficelage est par exemple utilisé pour le conditionnement de piles de cartons d'emballage, de faisceaux de fils électriques ou de piles de journaux.

En particulier, le ficelage est utilisé pour attacher entre eux des produits à tige regroupés en bottes, par exemple des asperges, ou en bouquets, par exemple des fleurs coupées. Dans ce cas, on parle parfois de bottelage plutôt que de ficelage. Le bottelage peut ainsi être vu comme le ficelage d'un article conformé en botte ou en bouquet.

L'invention a vocation à s'appliquer au ficelage en général, comme au cas particulier du bottelage.

Pour des raisons de cadence, les professionnels du conditionnement utilisent généralement des dispositifs spécifiques pour ficeler les articles. Un dispositif de ficelage comprend généralement une table de travail munie d'une ouverture, un organe de ficelage qui place le lien autour d'un article qui est en déplacement dans une direction de transfert au-dessus de la table et amène une partie de ce lien sous la table de travail en formant une ou plusieurs boucles, et un bec de nouage capable de fermer la boucle en formant un noeud avec le lien, sous la table de travail.

La technique distingue généralement les dispositifs de type semi-automatique, dans lesquels le déplacement de l'article se fait manuellement, tandis que l'organe de ficelage et/ou le bec de nouage sont actionnés automatiquement, des dispositifs automatiques, dans lesquels le déplacement de l'article est également assuré de façon automatique, classiquement par un convoyeur.

Dans les dispositifs de ficelage semi-automatiques, le ficelage peut être déclenché manuellement, en réaction à la détection, par une cellule photoélectrique par exemple, de la présence d'un article, ou à la suite de la mise en tension du lien à la rencontre de l'article par exemple. Le déclenchement peut aussi être commandé par un interrupteur ou une pédale activés par un opérateur, ou encore par un contacteur activé par contact avec l'article.

Les dispositifs automatiques sont le plus souvent intégrés au sein d'une chaîne de conditionnement dont les différents postes coopèrent avec un même système de convoyage des articles. Le ficelage est alors déclenché à chaque fois qu'un article traverse le poste de ficelage.

Une ficeleuse automatique est par exemple connue de FR 2 903 668.

En parallèle de leur ficelage, on a pris l'habitude, depuis longtemps maintenant, d'étiqueter les articles.

Selon les articles, il arrive que l'on ne puisse pas utiliser d'étiquettes de type adhésif, en particulier dans le cas d'articles sales, comme les poireaux ou les oignons couverts de terre, ou fragiles, comme les fleurs coupées.

En remplacement, on cherche généralement à attacher l'étiquette au lien plutôt qu'à l'article. Ceci se fait le plus souvent manuellement, après le bottelage/ficelage de l'article.

Ce fonctionnement manuel est pratiquement incompatible avec la recherche de cadences de conditionnement toujours plus élevées et de conditions de sécurité toujours plus strictes.

De NL 2007 872, on connaît un bras pneumatique juxtaposé à une chaîne automatique de bottelage. Le bras pneumatique se déploie pour placer une étiquette auto-accrocheuse sur le lien, avant que le lien entoure l'article et donc avant nouage, puis se rétracte.

En attachant l'étiquette au lien plutôt que directement sur les articles, on limite l'endommagement de ces derniers.

Cependant, la botteleuse et le bras pneumatique travaillent de manière alternée, ce qui conduit à une augmentation de la durée d'un cycle. Pour réduire les temps morts entre la phase de travail de la botteleuse et celle du bras pneumatique, le cadencement doit être réglé précisément, ce qui peut se révéler compliqué.

En outre, le positionnement final de l'étiquette par rapport à l'article dépend de la taille de l'article là où on le lien est enroulé. Lorsque cette taille est susceptible de varier d'un article à l'autre, il existe un risque que, pour certains de ces articles, les informations portées par l'étiquette soient finalement masquées ou mal orientées.

De plus, la configuration et la dynamique du bras pneumatique sont spécifiques à la configuration particulière de la botteleuse. Un bras pneumatique donné est difficilement adaptable à d'autres machines automatisées et à d'autres applications.

Enfin, un bras pneumatique nécessite une alimentation en air comprimé, qui peut être coûteuse, fragile, encombrante et bruyante à l'usage.

De JP H09 267806 A on connaît un dispositif de ficelage comprenant une surface de travail fixe par rapport au reste du dispositif comprenant une ouverture au moins partiellement conformée en une fente, un organe de ficelage activable pour placer au moins un lien autour d'un article d'un premier côté de la surface et amener une partie de ce lien d'un second côté de la surface de travail opposé au premier côté en formant au moins une boucle, ainsi qu'un bec de nouage capable de fermer la boucle par un noeud du second côté de la surface de travail.

L'invention vient améliorer la situation. Elle vise un dispositif de ficelage du type comprenant une surface de travail fixe par rapport au reste du dispositif comprenant une ouverture, un organe de ficelage activable pour placer au moins un lien autour d'un article qui est en déplacement dans une direction de transfert d'un premier côté de la surface de travail et amener une partie de ce lien d'un second côté de la surface de travail en formant au moins une boucle et un bec de nouage capable de fermer la boucle par un noeud du second côté de la surface de travail. L'ouverture est au moins partiellement conformée en une fente qui s'étend généralement selon la direction de transfert et qui est agencée pour laisser passer une partie de la boucle mais maintenir le noeud du second côté de la surface de travail sur une partie au moins du déplacement de l'article selon la direction de transfert.

Le dispositif proposé permet d'écarter aisément la partie de l'article prise dans le lien, du noeud qui ferme ce dernier.

Entre autres choses, cela permet d'attacher une étiquette au niveau de la boucle, par exemple en la fixant à une partie du lien écartée de l'article ou en l'intercalant entre l'article et le noeud, dans la boucle.

Le dispositif proposé est compatible avec un fonctionnement complètement automatisé et un fonctionnement semi-automatisé. Il évite d'endommager les articles. Le positionnement de l'étiquette par rapport à l'article est précis et reproductible. En particulier, il est indépendant des variations de dimension entre articles. Il est capable de fonctionner à des cadences comparables à celles des ficeleuses classiques.

Le dispositif proposé peut être réalisé en adaptant, avec peu de modifications, des ficeleuses existantes.

Le dispositif proposé a vocation à être utilisé plus largement que pour l'étiquetage d'articles.

Il permet par exemple d'associer à l'article un produit de nature différente, par exemple un accessoire. En particulier, il permet d'insérer un objet de petite dimension dans une botte d'objets de grande dimension.

Par exemple, le dispositif proposé peut être utilisé pour associer un sachet de produit phytosanitaire à un bouquet de fleurs coupées retenu par un lien. Le dispositif proposé demeure efficace malgré la différence de forme et de dimension entre les fleurs et le sachet. En particulier, il évite d'avoir à maintenir le sachet contre les fleurs avant le bottelage. Le serrage du lien rend difficile l'insertion du sachet entre le lien et les fleurs après bottelage.

Dans un autre exemple, le dispositif proposé permet d'associer à un pulvérisateur une paille ou un prolongateur à fixer à la tête de pulvérisation. Le dispositif proposé demeure efficace malgré la taille très faible de la paille par rapport au pulvérisateur.

Le dispositif proposé permet de maintenir le noeud à distance de l'article, et de maintenir des portions du lien à l'écart de l'article. Il est alors aisé d'y fixer une étiquette sans gêner le reste du conditionnement.

Grâce au dégagement des portions du lien, un espace libre est temporairement ménagé entre l'article et le noeud. Dès lors, il est possible d'y insérer aisément un objet. L'objet inséré peut prendre la forme d'un sachet, d'une étiquette, d'une paille, ou analogue. Plus généralement, tout objet de dimension adaptée à cet espace libre peut y être inséré avant que le noeud soit libéré de la fente. Cette libération provoque le resserrement du lien autour de l'ensemble formé de l'article et de l'objet inséré.

Cette opération postérieure au ficelage est particulièrement avantageuse lorsque le système de convoyage ne permet pas d'amener l'article et l'accessoire jusqu'au poste de ficelage dans une configuration adaptée au ficelage .Cela se produit notamment lorsque l'article et l'accessoire sont des objets de nature, de dimension et/ou de masse différente. Par exemple, les crochets, ou godets, supportant les fleurs coupées sur les systèmes de convoyage existants ne sont généralement pas aptes au maintien simultané d'un sachet de petite dimension avec un bouquet de fleurs coupées avant bottelage.

Selon un second aspect, l'invention vise un accessoire pour un dispositif de ficelage du type comprenant un organe de ficelage activable pour placer au moins un lien autour d'un article en déplacement dans une direction de transfert, et un bec de nouage. L'accessoire est adapté pour être assemblé au dispositif de manière à y former une surface de travail fixe par rapport au reste du dispositif comprenant une ouverture au moins partiellement conformée en une fente, de telle manière que l'organe de ficelage place le lien autour de l'article d'un premier côté de la surface de travail et amène une partie de ce lien du second côté de la surface de travail en formant au moins une boucle, tandis que le bec de nouage ferme la boucle par un noeud du second côté de la surface de travail. La fente s'étend généralement selon la direction de transfert. La fente est agencée pour laisser passer une partie de la boucle mais maintenir le noeud du second côté de la surface de travail sur une partie au moins du déplacement de l'article selon la direction de transfert.

Selon un troisième aspect, l'invention vise un procédé d'étiquetage automatique. Dans ce procédé, on déplace, selon une direction de transfert, un article d'un premier côté d'une surface de travail fixe par rapport au reste du dispositif qui comprend une ouverture au moins partiellement conformée en une fente. On place au moins un lien autour de l'article du premier côté de la surface de travail et l'on amène une partie de ce lien du second côté de la surface de travail en formant au moins une boucle. On ferme la boucle par un noeud du second côté de la surface de travail. On laisse passer une partie de la boucle au travers de la fente, mais on maintient le noeud du second côté de la surface de travail grâce à ladite fente lors d'une partie au moins du déplacement de l'article selon la direction de transfert. On écarte l'article de la fente de manière à placer une étiquette entre l'article et le noeud.

D'autres caractéristiques, détails et avantages de l'invention apparaîtront à la lecture de la description détaillée ci-après, et des dessins annexés, sur lesquels :
- la figure 1 montre une vue en perspective d'un dispositif de ficelage ;
- la figure 2 montre une vue détaillée, en perspective, d'une partie du dispositif de la figure 1 ;
- la figure 3 montre une vue de profil d'une autre partie du dispositif de la figure 1 ;
- la figure 4 montre une vue de dessus d'une autre partie encore du dispositif de la figure 1 ;
- la figure 5 montre une vue de dessus d'une table de travail pour un dispositif de ficelage ;
- la figure 6 montre une vue en perspective de la table de la figure 5 ;
- la figure 7 montre une vue de dessus de la table de travail de la figures 5, à l'état isolé ;
- la figure 8 montre une vue de profil de la table de la figure 7 ;
- la figure 9 montre une vue en perspective d'une partie de la table de travail des figures 5 à 8 ;
- la figure 10 correspond à la figure 6 et montre la table de travail en situation avec une étiquette ;
- la figure 11 montre une vue de profil correspondant à la figure 10 ;
- les figures 12 et 13 montrent une vue de profil d'un dispositif de ficelage en fonctionnement ;
- la figure 14 montre une vue de dessus du détail XI de la figure 11 ; et
- la figure 15 montre une vue de profil du détail XI de la figure 11, dans laquelle un article ficelé est représenté.

Les dessins annexés comprennent des éléments de caractère certain. Ils pourront donc, non seulement servir à compléter l'invention, mais aussi contribuer à sa définition, le cas échéant.

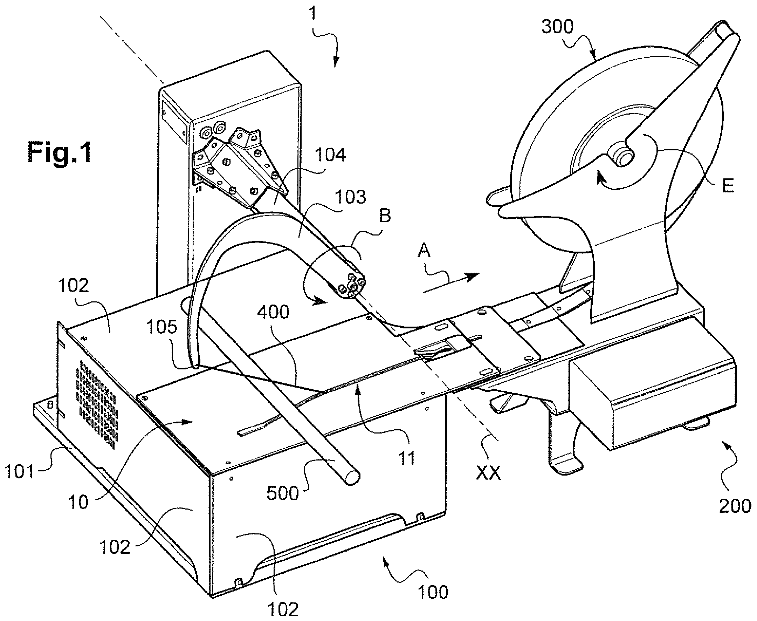

La figure 1 montre un dispositif de ficelage 1 destiné à réaliser un ou plusieurs liens serrés autour de produits non représentés individuellement. On désigne par article l'ensemble maintenu par un lien à la fin du ficelage/bottelage. L'article peut être constitué d'un produit unique ou d'un ensemble de produits similaires et regroupés ensemble. Par exemple, un pulvérisateur seul peut constituer un article. Plusieurs fleurs coupées qu'il est souhaitable d'assembler en un bouquet constituent un autre article.

Le dispositif de ficelage 1 comprend une unité de ficelage 100 et une unité d'étiquetage, ici sous la forme d'une étiqueteuse 200 juxtaposées l'une à l'autre.

L'unité de ficelage 100 comprend un châssis 101 au moins partiellement fermé par un carter 102 de manière à former un boîtier, ici de forme généralement parallélépipédique.

L'unité de ficelage 100 comprend en outre une table de travail 10, supportée ici par le boîtier. La table de travail 10 ferme une partie au moins du dessus du boîtier.

Le poste de ficelage 100 comprend en outre un organe de ficelage qui peut être activé pour placer au moins un lien 400 autour d'un article 500 qui se trouve au-dessus de la table de travail 10. Ici l'organe de ficelage comprend un bras coudé 103 monté pivotant à l'extrémité d'une potence 104, autour de l'axe longitudinal XX de celle-ci.

La potence 104 est maintenue fixement de manière horizontale au-dessus de la table de travail 10, ici par l'intermédiaire d'un montant qui s'élève sensiblement à la verticale depuis le châssis 101.

Le bras 103 comprend une première extrémité reliée à la potence 104 et une seconde extrémité 105 opposée à la première. La seconde extrémité 105 forme une extrémité libre, servant à amener le lien 400 qui, dans l'exemple, est un fil souple du type ficelle, élastique ou non. Ce lien 400 est, par exemple, déroulé à partir d'une bobine d'alimentation (non visible) montée folle ou freinée et logée sur le bâti 101.

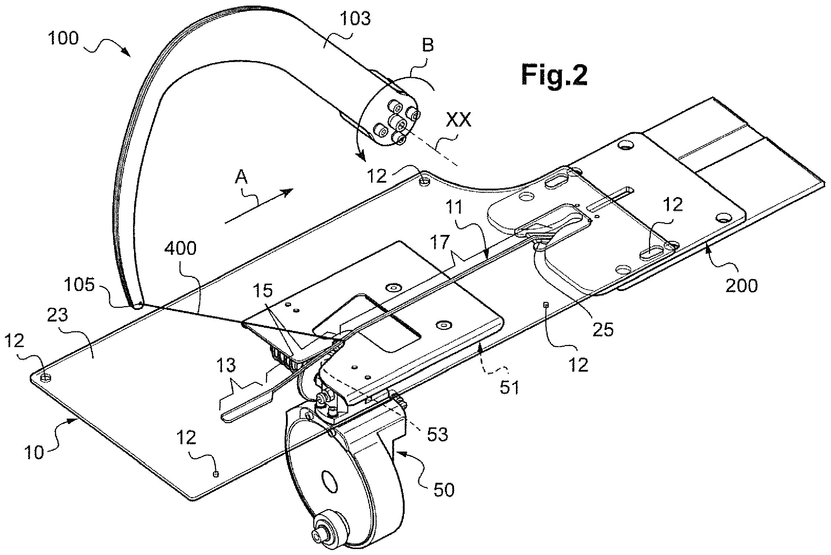

Dans l'état représenté en figures 1 et 2, qui correspond à un état initial de l'unité de ficelage 100, le lien 400 entoure le bras oscillant 103, quitte le bras oscillant 103 au voisinage de son extrémité libre 105, puis traverse une ouverture 11 ménagée au travers de la table de travail 10 pour être récupéré par un mécanisme de retenue 60 disposé sous la table de travail 10. Ici, le mécanisme de retenue 60 est logé dans le boîtier.

À partir de l'état initial, le bras 103 peut être actionné de manière à pivoter autour de l'axe longitudinal XX de sorte que son extrémité libre 105 quitte sa position initiale, ou position haute, pour une position basse, proche du mécanisme de retenue 60, située sous la table de travail 10. Ici, entre la position haute et la position basse, l'extrémité libre 105 traverse la table de travail 10, par l'ouverture 11. Ce faisant, l'extrémité libre 105 amène une partie du lien 400 sous la table de travail 10 en formant une boucle autour de l'article 500. Ce mouvement de pivotement est représenté par la flèche B sur la figure 1.

La partie du lien 400 amenée par le bras 103 sous la table de travail 10 vient en prise avec le mécanisme de retenue 60. Une boucle de lien 400 est formée autour de l'article 500. Dans l'exemple décrit ici, une seule boucle de lien 400 est formée autour de l'article 500. En variante, plusieurs boucles successives peuvent être réalisées avant nouage.

L'unité de ficelage 100 comprend en outre un mécanisme de nouage 50 incluant un bec de nouage 55. Le mécanisme de nouage 50 est disposé à proximité du mécanisme de retenue 60, ici sous la table de travail 10. Le mécanisme de nouage 50 inclut un bec de nouage 55 qui peut être activé pour venir en prise avec les parties du lien 400 engagées dans le mécanisme de retenue 60, former un noeud 401 avec ces parties, puis se désengager du noeud 401.

Ce faisant le bec de nouage ferme la boucle par le noeud 401, sous la table de travail 10.

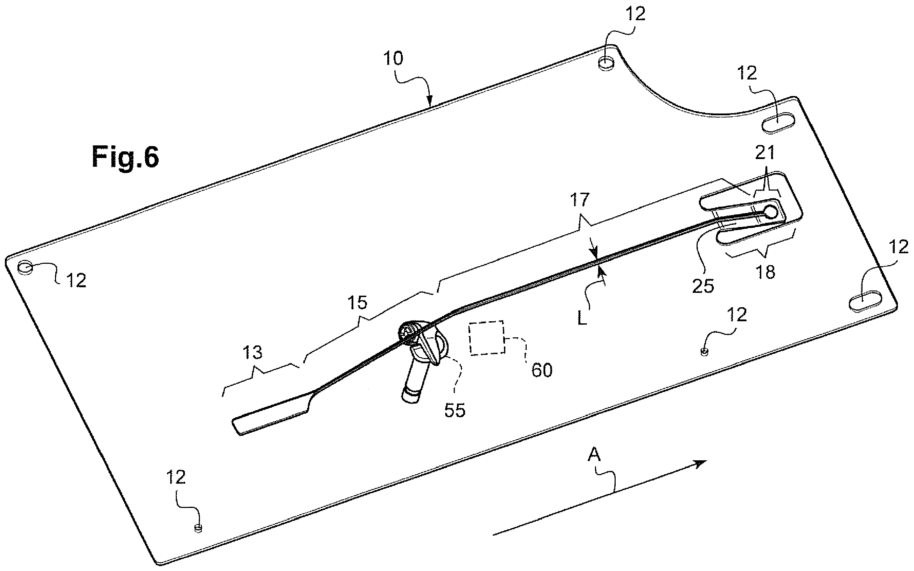

Le bras oscillant 103, le mécanisme de retenue 60, le mécanisme de nouage 50 et leur coopération mutuelle dans une ficeleuse sont connus en soi, par exemple par FR 2 790 732, en particulier aux pages 5 et 9 et sur les figures 1, 2, 5, 6, 7 et 8 (bras mobile) et par FR 2 736 618, en particulier de la ligne 28 de la page 7 à la ligne 11 de la page 8 (mécanisme de nouage) et de la ligne 16 de la page 8 à la ligne 13 de la page 11 (mécanisme de retenue). Le lecteur est invité à se reporter à ces documents autant que de besoin.

Ici, le mécanisme de nouage 50 et le mécanisme de retenue 60 sont logés, pour l'essentiel au moins, dans le boîtier.

Le dispositif 1 présente une zone libre au-dessus de la table de travail 10 qui permet d'amener l'article 500 en position par rapport au bras 103, pour enroulage et nouage du lien 400, puis de le déplacer jusqu'à l'étiqueteuse 200. Le déplacement de l'article 500 par rapport à la table de travail 10 peut être vu comme un transfert de l'article 500, dans une partie de la zone libre, ou zone de transfert. Cette zone de transfert s'étend sensiblement selon la direction de transfert de l'article, ou d'avancée, représentée, ici, par la flèche A (orientée de la gauche vers la droite sur la figure 1).

Dans l'exemple décrit ici, le transfert de l'article se fait de manière généralement rectiligne, selon une direction A allant de la gauche vers la droite de la figure 1. L'article peut également être déplacé par rapport à la table 10 suivant un chemin plus complexe, comportant par exemple un coude. Autrement dit, le terme direction ne doit pas être ici limité à son sens mathématique.

Le transfert de l'article 500 comprend un déplacement de ce dernier par rapport à la table 10, déplacement qui peut se faire en partie au moins en contact avec la table de travail 10, mais non nécessairement.

On fait maintenant référence à la figure 2 sur laquelle la table de travail 10 est représentée en transparence.

La table de travail 10 comprend un corps 23 généralement plat, réalisé ici à partir d'une plaque de tôle métallique. Le corps 23 présente une forme généralement rectangulaire.

L'ouverture 11 de la table de travail 10 présente une forme générale allongée selon la direction de transfert A. Ici, la direction de transfert A correspond à la direction longitudinale du corps 23.

Selon l'invention, l'ouverture 11 est au moins partiellement conformée en une fente 17 agencée pour laisser passer une partie de la boucle du lien 400 mais maintenir le noeud 401 sous la table de travail 10 sur une partie au moins du déplacement de l'article 500.

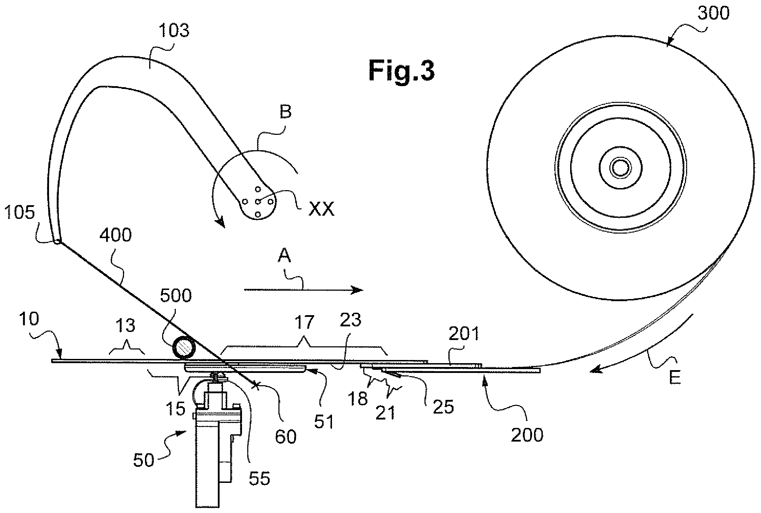

Comme cela est mieux visible en figure 3, la fente 17 s'étend le long d'une partie au moins de la zone de transfert, ici selon la direction de transfert A. La fente 17 s'étend sensiblement depuis le droit du bec de nouage 55, jusqu'à une position éloignée du bec de nouage 55 dans la direction de transfert A. Ainsi positionnée, la fente 17 est propre à rattraper le noeud 401 dès sa libération du bec de nouage 55. Le contour de la fente 17 du côté inférieur de la table de travail 10 forme alors maintient et guide pour le noeud 401.

La fente 17 présente une largeur L. La largeur L est, ici, sensiblement constante le long de la fente 17. La largeur L est supérieure au diamètre du lien 400 et inférieure au diamètre du noeud 401.

Dans une variante, la largeur L de la fente 17 est ajustable par un opérateur. La fente 17 peut être adaptée en fonction de la section transversale du lien 400 utilisé. La fente 17 peut être ajustée, par exemple par manipulation d'une vis de réglage contrôlant une pièce mobile dans la table de travail 10 ouvrant ou fermant la fente 17, ou en échangeant la table de travail 10 pour une autre table de travail. Un jeu de plusieurs tables de travail présentant chacune des largeurs L de fente 17 différente peut être prévu.

Lors du nouage, la partie du lien 400 qui correspond à la boucle se trouve en tension. Lorsque le noeud 401 est libéré du bec de nouage 55, le noeud 401 est rappelé vers l'article 500, c'est-à-dire vers la table de travail 10. Ce rappel peut résulter d'une rétractation du lien 400 et/ou d'une expansion de l'article 500.

Une rétractation élastique du lien 400 est par exemple obtenue grâce à l'utilisation d'un lien 400 élastique. Une expansion de l'article 500 se produit chaque fois qu'un article présente une tendance naturelle à s'expandre, par exemple une botte de rosiers.

Le noeud 401 vient en butée contre une face inférieure du corps 23 de la table de travail 10. Le noeud 401 est alors en appui sous la table de travail, sur le pourtour de la fente 17 de guidage. Le noeud 401 reste maintenu sous la table de travail 10, sensiblement au droit du bec de nouage 55. L'article 500 reste disposé au-dessus de la table de travail 10, par exemple posé dessus ou maintenu au-dessus. La boucle du lien 400 s'étend au travers de l'ouverture 11 au niveau de l'extrémité de la fente 17 proche du bec de nouage 55, entre l'article 500 et le noeud 401.

Lorsqu'on déplace l'article 500 par rapport à la table de travail 10, la fente 17 guide la boucle de lien 400 tout en maintenant le noeud 401 sous la table de travail 10.

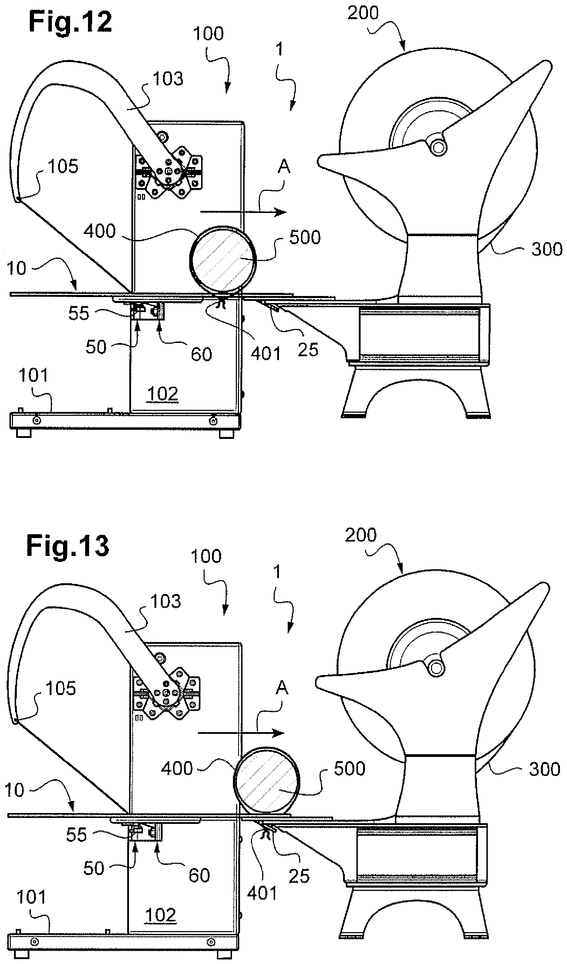

Lorsque l'article 500 est déplacé le long de la zone de transfert et de la fente 17 selon la direction de transfert A, le noeud 401 glisse contre le pourtour de la fente 17 sous la table de travail 10. L'article 500 et le noeud 401 sont mobiles en translation selon la direction de transfert A et maintenus séparés l'un de l'autre verticalement par une partie de la table de travail 10. Cette disposition est représentée schématiquement en figure 12, en une position intermédiaire au cours du déplacement le long de la fente 17.

Dans l'exemple décrit ici, l'ouverture 11 comprend, outre la fente 17, différentes portions successives ordonnées de la manière suivante sensiblement selon la direction de transfert A :
- une portion de passage 13 pour le bras oscillant 103,
- une portion de passage 15 du fil 400 en amont de la fente 17, et
- une portion élargie pour la libération du noeud 401 en aval de la fente 17, sous la forme d'une lumière 21.

Chacune des portions de l'ouverture 11 est ouverte sur ses voisines. Autrement dit, le passage de l'une à l'autre des portions de l'ouverture 11 selon une direction sensiblement parallèle à la direction de transfert A est possible.

La portion de passage 13 pour le bras 103 présente une forme et des dimensions sélectionnées pour permettre le passage du bras 103 au travers de la table de travail 10. Au cours de sa rotation autour de l'axe XX dans la direction représentée par la flèche B, l'extrémité libre 105 du bras pivotant 103 plonge sous la table de travail 10 en passant par la portion de passage 13. Dans des variantes, la table de travail 10 et le bras 103 sont mutuellement agencés de sorte que le mouvement du bras contourne la table de travail 10. Dans ce cas, l'ouverture 11 peut être dépourvue de la portion de passage 13.

La portion de passage 15 du fil 400 est formée en amont du bac de nouage 55, en aval de la portion de passage 13 pour le bras oscillant 103 et en continuité de la portion de passage 13. La portion de passage 15 présente une forme et des dimensions adaptées pour le passage du lien 400 lors de la descente du bras 103. Un brin de lien 400 est alors tendu entre l'article 500 au-dessus de la table de travail 10 et l'extrémité libre 105 du bras 103 sous la table de travail 10.

La fente 17 s'étend en aval de la portion de passage 15 pour le lien 400 et en continuité de celle-ci. La fente 17 rejoint la portion de passage 15 sensiblement au droit du bec de nouage 55. En amont du bec nouage 55, le lien 400, non encore noué, est guidé avec précision au travers de la portion de passage 15 jusqu'au bec de nouage 55 pour s'engager avec celui-ci.

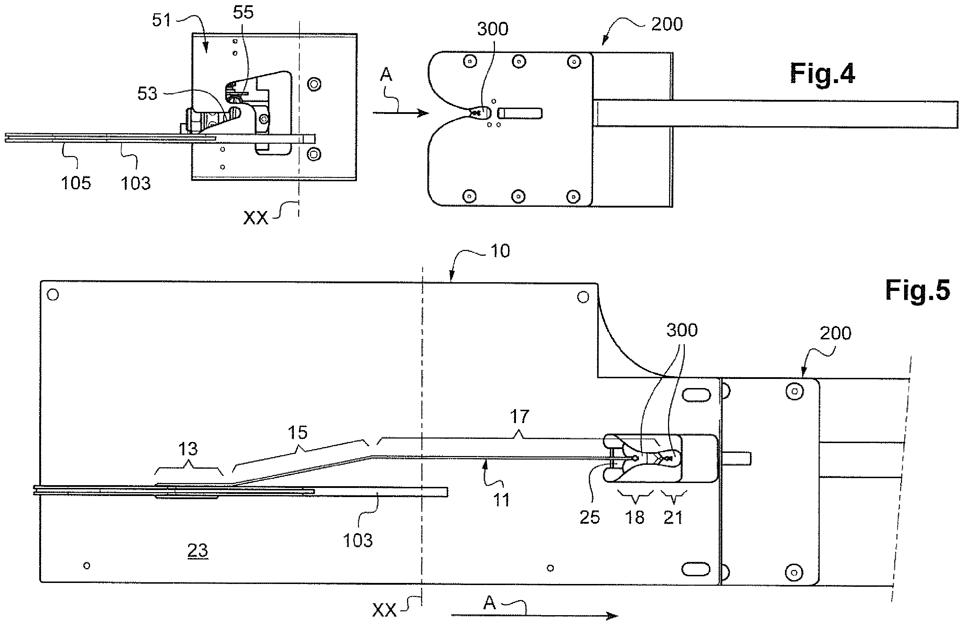

L'orientation de la portion de passage 15 est configurée pour guider le lien 400 au cours de la descente du bras pivotant 103 vers le mécanisme de retenue 60, dans l'exemple en poussant le lien 400 dans une direction orientée vers le support de la potence 104. La portion de passage 15 et la fente 17 se distinguent, ici, par un changement de direction dans le plan principal de la table de travail 10. Ce changement de direction est par exemple visible en figure 5. , Dans un mode de réalisation différent, la portion de passage 15 et la fente 17 peuvent être sensiblement dans le prolongement et alignées l'une avec l'autre. La fente 17 prolonge la portion de passage 15 en aval du bec de nouage 55.

En aval de la fente 17, la lumière 21 prend ici la forme d'une portion élargie de l'ouverture 11 par rapport à la fente 17. La fente 17 débouche dans la lumière 21. La lumière 21 présente, ici, une forme sensiblement circulaire. La forme et les dimensions de la lumière 21 sont propres au passage du noeud 401 depuis une zone inférieure à la table de travail 10 vers une zone située au-dessus de la table de travail 10. Autrement dit, la lumière 21 forme passage de libération pour le noeud 401.

À la fin du coulissement du noeud 401 le long de la fente 17, le noeud 401 atteint la lumière 21 et la traverse. Le lien 400 rappelle le noeud 401 à proximité de l'article 500 par rétractation du lien 400 et/ou expansion de l'article 500.

La lumière 21 est située à distance du bec de nouage 55 selon la direction de transfert A. Selon la direction de transfert A de l'article 500, la distance séparant la lumière 21 du bec de nouage 55 selon la direction de transfert A correspond sensiblement à la longueur de la fente 17 de l'ouverture 11. Dans le mode de réalisation représenté sur les figures, la longueur de la fente 17 est d'environ 170 millimètres. Dans des variantes, la fente 17 présente une longueur supérieure à 35 millimètres.

Le noeud peut alors traverser la table de travail vers l'article seulement lorsque l'article est éloigné du bec de nouage. L'espace situé entre le bec de nouage et la lumière de libération du noeud selon la direction de transfert peut alors être utilisé pour intégrer un poste complémentaire de conditionnement, par exemple l'étiqueteuse 200.

Optionnellement, le mécanisme de nouage 55 comprend une platine 51 disposée au-dessus du bec de nouage 55 tel que cela est représenté sur les figures. Une encoche 53 est ménagée dans la platine 51. L'encoche 53 s'ouvre vers l'amont de la zone de transfert (vers la gauche sur la figure 2). Le fond de l'encoche 53 est disposé sensiblement au droit du bec de nouage 55, au-dessus de ce dernier. Avant descente du bras 103, le lien 400 traverse la platine 51 par l'encoche 53.

La table de travail 10 est fixée parallèlement à la platine 51. La table de travail 10 est maintenue sensiblement au-dessus de la platine 51 de sorte qu'un écart vertical est préservé entre la platine 51 et la table de travail 10. Cet écart, visible en figure 3, peut être réglé, par exemple, par l'interposition de rondelles d'épaisseur choisie entre la table de travail 10 et le châssis 101 au niveau d'orifices 12 ménagés dans la table de travail 10 pour la fixation de la table de travail 10 au reste de l'unité de ficelage 1. L'écart est supérieur au diamètre du noeud 401.

Après libération depuis le bec de nouage 55, le noeud 401 passe au travers de l'encoche 53 de la platine 51, à proximité du fond de l'encoche 53.

Dans l'exemple décrit ici, le contour de l'encoche 53 sert d'appui pour le lien 400 au cours du nouage. En variante, le lien 400 peut être maintenu par d'autres organes au cours du nouage. L'unité de ficelage 100 peut être dépourvue de la platine 51.

Dans l'exemple représenté sur les figures, le dispositif 1 est semi-automatique. Le déplacement de l'article 500 est généré par un opérateur qui déplace manuellement l'article 500.

Dans un mode de réalisation automatique, l'unité de ficelage est 100 est intégrée au sein d'une machine ou d'une chaîne de fabrication et constitue alors un poste de ficelage. L'article 500 est déplacé par un système de convoyage. Le système de convoyage est configuré pour déplacer des articles 500 les uns à la suite des autres. Le déplacement des articles 500 peut être continu ou pas-à-pas le long d'un trajet de transfert de la machine passant par la zone de transfert du poste de ficelage. Pour l'essentiel, les fonctions et les structures restent similaires. Cependant, la ficeleuse est ponctuellement adaptée pour coopérer avec le système de convoyage. Par exemple, le bâti 101 et le carter 102 peuvent être communs à d'autres parties de la chaîne de conditionnement.

Quelle que soit la configuration automatique ou semi-automatique, la fente 17 permet de guider le déplacement de l'article 500 une fois le lien 400 noué tandis que l'article 500 est entraîné par un opérateur ou par le système de convoyage.

Dans des variantes, la fente 17 s'étend selon une direction comprise dans le plan principal de la table de travail 10 mais formant un angle non nul par rapport à la direction de transfert A. Le noeud 401 peut alors être guidé en étant décalé selon une direction sensiblement perpendiculaire à la direction de transfert A. La boucle du lien 400 fermée par le noeud 401 peut être déplacée autour de l'article 500 sensiblement selon la direction allongée de l'article 500. Par exemple, la boucle de lien 400 peut être disposée et nouée autour de la base des tiges de fleurs d'un bouquet puis être remontée vers les fleurs du bouquet après nouage.

La force de traction du lien 400 tirant sur le noeud 401 retenu par la table de travail 10 permet d'augmenter le serrage du noeud 401 lui-même. La fiabilité du ficelage s'en trouve améliorée. Le risque de dénouage accidentel est réduit.

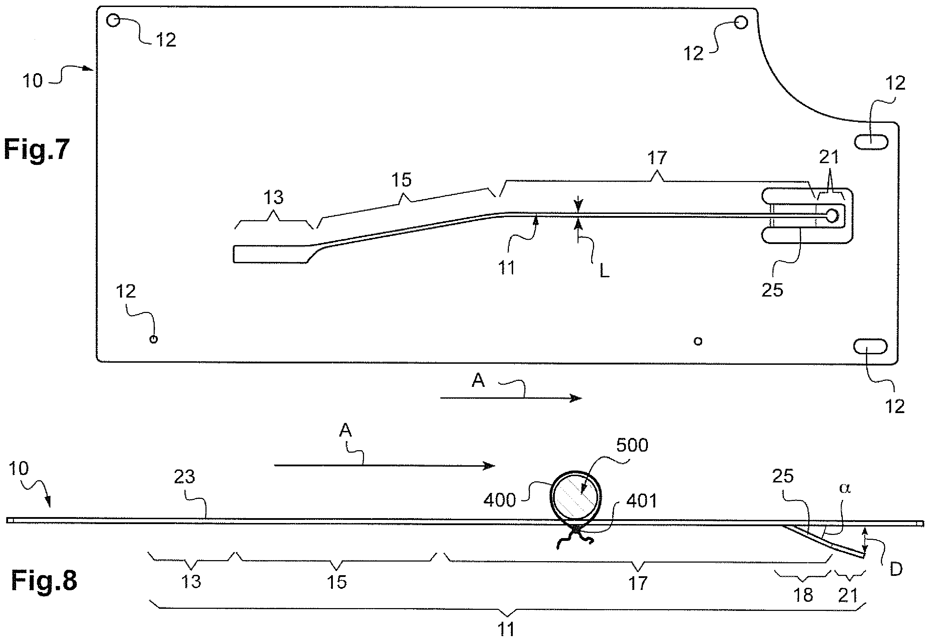

Dans l'exemple représenté sur les figures, la table de travail 10 est en outre pourvue d'un déflecteur 25. Le déflecteur 25 fait saillie depuis une face du corps 23, ici depuis la face inférieure. Comme représenté en figure 8, le déflecteur 25 forme un angle α avec la face du corps 23 en s'ouvrant dans le sens de la direction de transfert A de l'article 500. L'angle α est ici compris entre 18° et 25°, par exemple environ 20°.

La table de travail présente une forme générale de plaque tandis que le déflecteur est conformé en une portion de la plaque décalée verticalement par rapport au plan principal de la plaque. La fabrication de la table de travail est alors aisée et peu coûteuse. Par exemple, la table de travail est réalisée par conformation d'une plaque de tôle métallique, puis le déflecteur 25 est obtenu par pliage d'une partie de la plaque. D'éventuelles arêtes vives peuvent en outre être usinées pour diminuer les risques de coupures accidentelles du lien 400 comme des utilisateurs.

La fente 17 de l'ouverture 11 comprend une portion d'extrémité éloignée du bec de nouage, ou extrémité aval 18. La portion d'extrémité aval 18 est ménagée traversante dans le déflecteur 25. La portion d'extrémité aval 18 s'étend en partie le long du déflecteur 25. La portion d'extrémité aval 18 s'étend donc selon une direction formant un angle α avec la direction de transfert A de l'article 500. La lumière 21 de libération du noeud 401 est ménagée à proximité de l'extrémité libre du déflecteur 25, au travers du déflecteur 25 et à l'extrémité aval de la portion d'extrémité aval 18 de la fente 17.

Comme cela est mieux visible en figure 8, le déflecteur 25 et la portion d'extrémité aval 18 de la fente 17 qui y est ménagée définissent un espace D avec le corps 23. La dimension de l'espace D selon la direction sensiblement verticale augmente de manière sensiblement continue en progressant selon la direction de transfert A, en correspondance avec l'angle a.

Dans l'exemple décrit ici, la portion d'extrémité aval 18 présente une configuration particulière : elle est agencée pour guider le noeud 401 vers le bas en fin de course et avant libération du noeud 401 au travers de la lumière 21.

En fonctionnement, après libération du noeud 401 du bec de nouage 55, le noeud 401 est guidé le long de la fente de guidage 17. Lorsque le noeud 401 vient en contact du déflecteur 25 le long de la portion d'extrémité aval 18, il est décalé vers le bas par le déflecteur 25. L'article 500 reste maintenu au-dessus du corps 23 de la table de travail 10, par exemple à son contact. La boucle du lien 400 est alors étirée entre l'article 500 et le noeud 401 selon une direction sensiblement verticale.

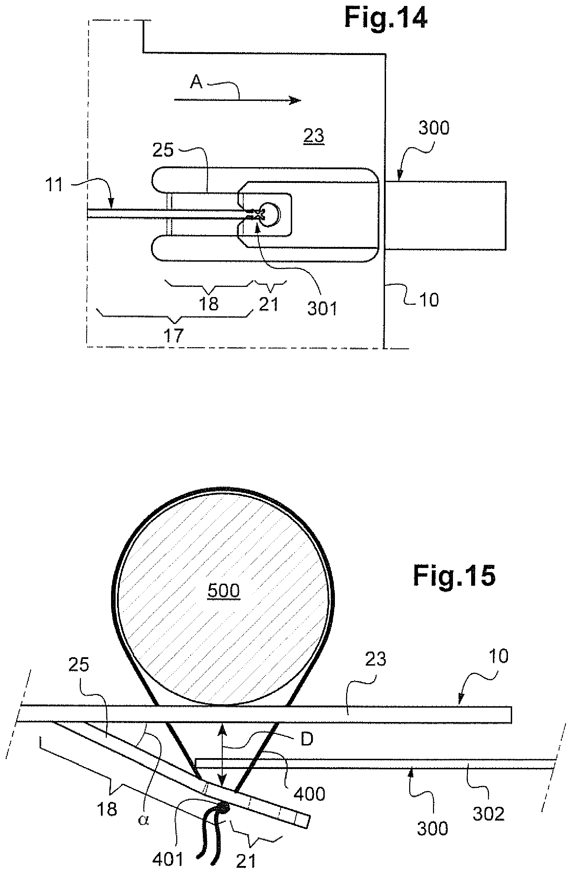

Au cours du fonctionnement le noeud 401 est alors écarté de l'article 500, ici vers le bas. Une section de passage dans la boucle du lien 400 est ouverte comme cela est par exemple représenté en figure 15. Il est alors aisé d'intervenir sur les parties de lien 400 dégagées pour y fixer une étiquette par exemple et/ou insérer un objet entre l'article 500 et le lien 400 qui l'entoure. Une telle opération peut être réalisée sous la table de travail 10 sans entraver les mouvements au-dessus de la table de travail 10.

Une partie de la boucle du lien 400 à proximité du noeud 401 est alors accessible dans l'espace D. Cette configuration est représentée schématiquement en figures 13 et 15. La portion de la boucle maintenue sous la table de travail 10 délimite une zone libre. La forme et les dimensions de la zone libre sont fonctions de l'espace D et de la section de l'article 500 autour duquel est entouré le lien 400. L'espace D offre un accès à une partie du lien 400 s'étendant entre le noeud 401 et l'article 500. L'accès se fait transversalement à la direction de transfert A. Une telle accessibilité permet d'intervenir sur le lien 400 au cours du conditionnement, soit par une opération manuelle, soit par l'ajout d'un poste supplémentaire dans une chaîne de conditionnement automatisée.

À ce stade du cycle de conditionnement, diverses opérations complémentaires du ficelage/bottelage peuvent être réalisées.

Par exemple, dans le cas de réalisation de bouquets de fleurs, la zone libre entre les tiges de fleurs et le noeud 401 peut être utilisée pour insérer un sachet de produit phytosanitaire et/ou une étiquette. Dans un autre exemple, une paille peut être glissée entre le lien 400 et un récipient sous pression entouré du lien 400.

Généralement, l'espace situé sous la table de travail 10 est moins encombré que l'espace situé au-dessus. En particulier dans les installations automatisées, les systèmes de convoyage des articles 500 présentent souvent un système de courroie ou de bandage supportant des supports spécifiquement adaptés aux articles 500. Toute opération réalisée au-dessus de la table de travail 10 risque de gêner le passage des articles 500 et des supports. La zone située sous la table de travail 10 en aval du bec de nouage 55 est moins encombrée. Il est plus aisé d'y installer des moyens de conditionnement complémentaires du ficelage.

Dans l'exemple représenté sur les figures, le corps 23, de forme sensiblement plane, est destiné à supporter les articles 500.

Dans l'exemple décrit ici, le déflecteur 25 fait saillie du corps 23 vers le bas et est destiné à tirer le noeud 401 vers le bas. Par conséquent, l'espace D créé est situé du côté opposé de la table de travail 10 à la zone de transfert. Pour le reste, la surface supérieure de la table de travail 10 étant sensiblement plane, la direction de transfert A des articles 500 peut être agencée horizontalement.

En variante, l'espace D peut être créé au-dessus de la table de travail 10. Un déflecteur peut être agencé de manière à faire saillie de la face supérieure du corps 23 de la table de travail 10. Dans ce cas, la portion d'extrémité aval 18 de la fente 17 et la lumière 21 de libération du noeud 401 sont ménagées dans le corps 23 de la table de travail 10. Le déflecteur 25 est propre à dévier, ici surélever, les articles 500 au cours de leur avancée. Lors de son transfert, l'article 500 décrit un coude. Cette variante permet d'ajouter un poste complémentaire de conditionnement opérant au-dessus du plan principal de la table de travail 10. Ceci peut être souhaitable, par exemple lorsque l'espace situé sous le plan principal est encombré.

Dans l'exemple représenté aux figures 1 à 5 et 10 à 13, l'espace D créé est utilisé pour l'étiquetage du lien 400 entourant l'article 500. L'étiqueteuse 200 de la figure 1 est agencée pour venir placer des étiquettes 300 dans l'espace D.

L'étiqueteuse 200 comprend, ici, un dispositif semi-automatique prévu et utilisé pour fermer des sacs au moyen des étiquettes 300. À titre d'exemple, un dispositif du type connu sous la référence "*086A*" ou "*0*8*6AS*" commercialisé par la société Kwik Lok peut être utilisé en tant qu'étiqueteuse 200. Utiliser des machines existantes permet de réduire les coûts de conception du dispositif 1. Par ailleurs, le dispositif 1 de ficelage est aisément modulable en remplaçant l'étiqueteuse 200 par une autre en fonction des besoins. En variante, le poste d'étiquetage peut être similaire à celui décrit dans US 4 171 602.

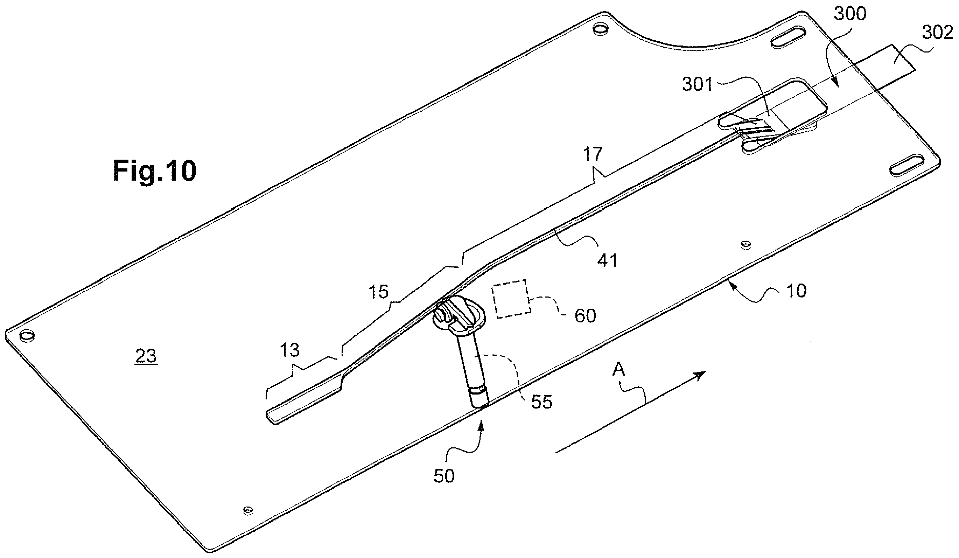

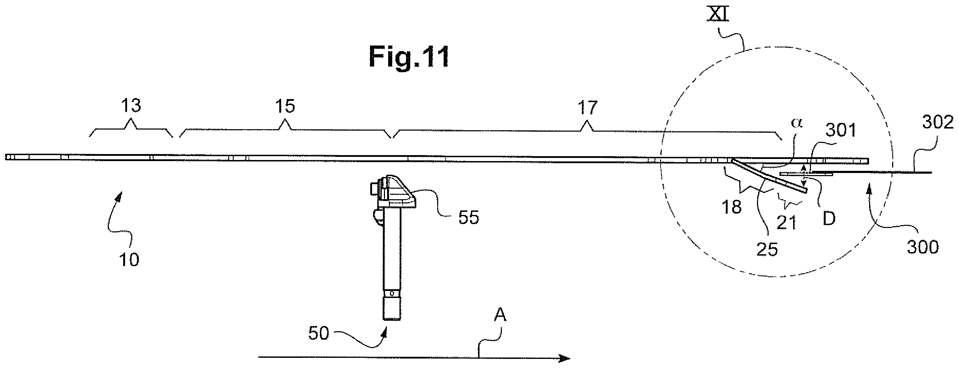

Une étiquette 300 est maintenue, en une partie active de l'étiqueteuse 200, au droit d'une partie de la fente 17, ici dans l'espace D crée entre le déflecteur 25 et le corps 23 de la table de travail 10, en amont de la lumière 21 de libération du noeud 401. Un tel positionnement est par exemple présenté en figures 10 et 11. L'étiquette 300 présente une partie d'attache 301 et un corps 302.

La partie d'attache 301 comprend, ici, une encoche ouverte vers l'amont du poste de ficelage 100. L'étiquette 300 est maintenue immobile par rapport à la table de travail 10. L'étiquette 300 est maintenue par une zone active de l'étiqueteuse 200. Dans cette position, l'encoche de l'étiquette 300 est disposée dans l'espace D, entre le déflecteur 25 et le corps 23 de la table de travail 10.

Au cours de l'avancée de l'article 500, avant libération du noeud 401 au travers de la lumière 21, une partie de la boucle du lien 400 maintenue dans l'espace D s'insère dans l'encoche de l'étiquette 300. Une butée de l'étiqueteuse 200 s'oppose au mouvement de l'étiquette 300 selon la direction de transfert A lorsqu'un brin de la boucle du lien 400 pénètre dans l'encoche.

L'encoche de l'étiquette 300 présente, ici, une forme agencée pour faciliter la pénétration du brin de lien 400 dans l'encoche et empêcher sont retrait accidentel depuis l'encoche dans le sens opposé. Les formes et dimensions de l'encoche peuvent être adaptées en fonction du lien 400 utilisé.

Des formes d'encoches sont par exemple décrites dans EP 0 053 390 pour des attaches destinées à fermer des sacs. Des encoches de forme similaire et de dimensions adaptées au lien 400 peuvent être conformées dans les étiquettes 300 du dispositif de ficelage 1.

En continuant d'avancer selon la direction de transfert A, le brin du lien 400 est inséré dans l'encoche jusqu'à atteindre la lumière 21 et le noeud 401 est libéré. L'article 500, le lien 40 qui l'entoure et l'étiquette 300 fixée sur un brin du lien 400 peuvent alors être extraits du dispositif 1.

En attachant l'étiquette 300 sur le lien 400 seulement après nouage de celui-ci, le positionnement relatif de l'article 500 et de l'étiquette 300 est précis. Après extraction de l'étiquette 300, l'étiqueteuse 200 vient disposer une nouvelle étiquette 300 dans l'espace D par l'intermédiaire de la zone active de l'étiqueteuse 200. La nouvelle étiquette 300 est utilisée pour l'étiquetage de l'article 500 du cycle suivant de fonctionnement.

Dans l'exemple décrit ici, l'engagement d'un unique brin de lien 400 dans l'étiquette 300 est suffisant pour l'étiquetage. En variante, les deux brins de la boucle du lien 400 de part et d'autre du noeud 401 peuvent être engagés dans l'encoche de l'étiquette 300. Pour cela, le positionnement relatif de l'étiquette 300 par la zone active de l'étiqueteuse 200 et de l'espace D est ajusté selon la direction de transfert A. L'étiquette 300 est par exemple maintenue plus en amont sur la direction de transfert A. Dans ce cas, le noeud 401 ne traverse la lumière 21 qu'après que les deux brins de la boucle de lien 400 ont été insérés dans l'encoche de l'étiquette 300.

Un article 500 ainsi bottelé comprend une étiquette 300 disposée entre l'article 500 et le noeud 401. L'indexation de l'étiquette 300 le long de la boucle de lien 400 autour de l'article 300 est ainsi améliorée et préservée dans le temps. Le noeud 401 s'oppose au coulissement de l'étiquette 300 le long du lien 400 dans les deux sens.

Dans le mode de réalisation représenté sur la figure 1, les étiquettes 300 sont préalablement stockées de manière attachées les une aux autres sous forme d'une bobine. Les directions d'ouverture des encoches des étiquettes 300 de la bobine sont alignées les unes avec les autres. Autrement dit, les encoches des étiquettes 300 sont orientées selon la direction de déroulement E de la bobine, dans la direction confondue mais de sens opposée à celle de la direction de transfert A. Une telle configuration est particulièrement adaptée pour une installation semi-automatique. L'opérateur déplace l'article 500 jusqu'à enclenchement de l'un au moins des brins du lien 400 dans l'étiquette 300 puis extrait l'article 500 bottelé et étiqueté en tirant l'ensemble dans une direction sensiblement vers le haut et vers l'opposé de la direction de transfert A.

Dans un autre mode de réalisation, adapté pour une configuration automatisée dans une chaîne de conditionnement comprenant un système de convoyage, le poste d'étiquetage est adapté. La direction de déroulement E de la bobine d'étiquettes 300 est orientée sensiblement à la perpendiculaire de la direction de transfert A. Ainsi, la position de l'étiqueteuse 200 est telle que le déplacement des articles 500 selon la direction A n'est pas entravé. Les étiquettes 300 sont montées sur une bobine de sorte que les encoches des étiquettes 300 soient orientées perpendiculairement à la direction de déroulage E de la bobine. Autrement dit, au lieu d'être configuré longitudinalement par rapport au poste de ficelage 100, le poste d'étiquetage 200 opère transversalement au poste de ficelage 100. Les étiquettes 300 sont amenées et maintenues dans l'intervalle D selon une direction sensiblement perpendiculaire à la direction de transfert A.

Lorsque les articles 500 sont convoyés au-delà de la lumière 21, la butée de l'étiqueteuse 200 est rétractée pour libérer l'étiquette 300 une fois celle-ci engagée autour d'au moins un brin de la boucle du lien 400. L'étiquette 300 est extraite de la partie active de l'étiqueteuse 200 par la boucle de lien 400. L'article 500 bottelé et étiqueté continue son trajet sur la chaîne de conditionnement selon la direction de transfert A. Des postes supplémentaires peuvent être prévus dans le dispositif 1.

L'étiqueteuse 200 est configurée pour séparer une étiquette 300 du reste de la bobine par découpe ou arrachage et la disposer puis la maintenir dans l'espace D au cours d'un cycle. La séparation de l'étiquette 300 de la bobine peut être réalisée avant que le lien 400 y soit inséré ou provoqué lors de l'extraction de l'étiquette 300 depuis l'espace D.

Dans des variantes, les étiquettes 300 sont stockées détachées, par exemple en pile. L'étiqueteuse 200 peut être appelée distributeur d'étiquettes.

Le poste d'étiquetage 200 fonctionnant de manière transversale peut être utilisé sur un dispositif de ficelage semi-automatisé.

Dans les exemples décrits jusqu'ici, la table de travail porte une surface de travail qui est intercalée entre l'article en déplacement d'un premier côté de la surface de travail (le dessus de la table) et l'organe de ficelage du second côté de la surface (le dessous de la table). Le dessus de la table correspond à l'espace situé face à la surface de travail. Le dessous de la table correspond à l'espace situé derrière la surface de travail. La fente de la surface de travail s'étend généralement selon la direction de transfert. La fente est agencée pour maintenir le noeud du second côté de la surface de travail sur au moins une partie du déplacement.

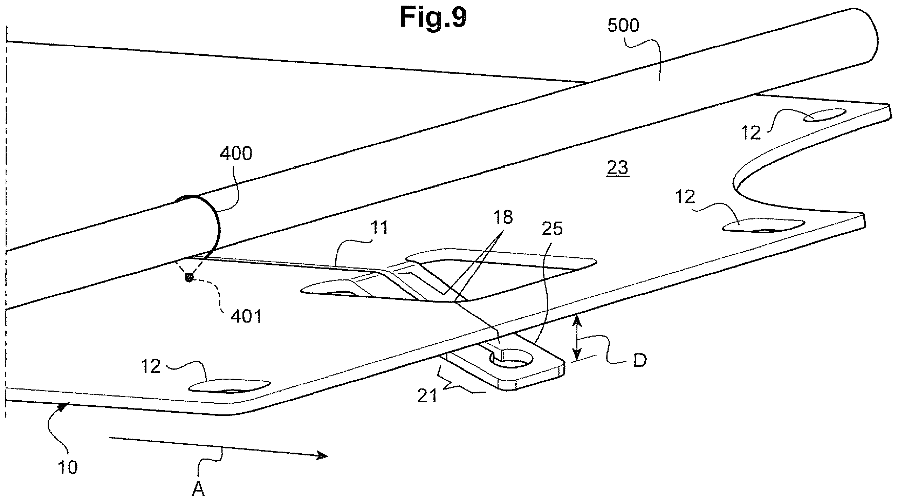

Selon un autre aspect, l'invention couvre également un accessoire destiné à équiper une ficeleuse/botteleuse existante pour la rendre combinable avec une étiqueteuse existante ou avec une machine prévue pour fermer des sacs de manière à réaliser une surface de travail. Par exemple, un tel accessoire peut prendre la forme d'une plaque conformée telle que représentée en figures 7 à 9 et propre à être assemblé à une ficeleuse existante pour former la table de travail 10 décrit ci-avant, par exemple en remplacement d'une table de travail existante.

L'invention peut aussi être vue comme un procédé de ficelage durant lequel, au lieu de libérer complètement le noeud après nouage comme dans les dispositifs connus, on retient le noeud à distance et/ou on l'éloigne de l'article pour faciliter des opérations de conditionnement ultérieures au nouage.

Par rapport à une surface de travail portée par un organe quelconque selon l'invention, la table de travail présente en outre la particularité d'être orientée sensiblement à l'horizontal et de définir la limite basse de la zone de transfert. Une table de travail peut présenter une fonction additionnelle avantageuse de support des articles qui sont déplacés au-dessus. Néanmoins, ces particularités de la table de travail ne présentent pas de caractère nécessaire à la mise en oeuvre de l'invention.

Autrement dit :
- La surface de travail selon l'invention peut être sensiblement horizontale mais définir la limite haute de la zone de transfert avec l'organe de ficelage disposé au-dessus.
- La surface de travail peut être disposée inclinée par rapport à l'horizontale, par exemple à la verticale. Lorsque la surface de travail est disposée verticalement, l'article et le noeud sont séparés latéralement.

Dans le mode de réalisation représenté sur les figures, la surface de travail et la surface portant les articles sont confondues, ou du moins au même niveau, et portées par la table de travail. En variante, la surface de travail et la surface de support des articles peuvent être réalisées sous forme de pièces de construction différentes, y compris disposées à des niveaux différents du dispositif de ficelage.

Bien entendu, l'invention n'est pas limitée aux formes de réalisation décrites précédemment à titre d'exemples, mais elle englobe toutes les variantes que pourra envisager l'homme de l'art dans le cadre des revendications ci-après.

## Revendications

1. Dispositif de ficelage du type comprenant :
- une surface de travail (10) fixe par rapport au reste du dispositif comprenant une ouverture (11) ;
- un organe de ficelage (103) activable pour placer au moins un lien (400) autour d'un article (500) qui est en déplacement dans une direction de transfert (A) d'un premier côté de la surface de travail (10) et amener une partie de ce lien (400) d'un second côté de la surface de travail (10) opposé au premier côté en formant au moins une boucle ;
- un bec de nouage (55) capable de fermer la boucle par un noeud (401) du second côté de la surface de travail (10) ;
- dans lequel l'ouverture (11) est au moins partiellement conformée en une fente (17) qui s'étend généralement selon la direction de transfert (A) et qui est agencée pour laisser passer une partie de la boucle mais maintenir le noeud (401) du second côté de la surface de travail (10) sur une partie au moins du déplacement de l'article (500) selon la direction de transfert (A).

2. Dispositif de ficelage selon la revendication 1, dans lequel la surface de travail (10) est porté par une table de travail disposée sensiblement à l'horizontale et dans lequel le premier côté de la surface de travail (10) et le second côté de la surface de travail (10) correspondent respectivement au-dessus et au-dessous de la table de travail.

3. Dispositif selon l'une des revendications précédentes, dans lequel l'ouverture (11) comprend une portion élargie (21) dans laquelle débouche la fente (17), et qui est agencée pour laisser passer le noeud (401), la portion élargie (21) étant à l'écart du bec de nouage (55) selon la direction de transfert (A).

4. Dispositif selon l'une des revendications précédentes, dans lequel la fente (17) s'étend en partie au droit du bec de nouage (55).

5. Dispositif selon l'une des revendications précédentes, dans lequel l'ouverture (11) comprend en outre une portion de passage (15) pour le lien (400), et la fente (17) rejoint la portion de passage (15) sensiblement au droit du bec de nouage (55).

6. Dispositif selon l'une des revendications précédentes, comprenant un déflecteur (25) agencé pour éloigner le noeud de l'article (500) lors du déplacement de l'article (500) selon la direction de transfert (A), lorsque le noeud (401) est maintenu du second côté de la surface de travail (10).

7. Dispositif selon la revendication 6, dans lequel le déflecteur (25) est agencé pour dévier l'article (500) par rapport au noeud (401), au droit d'une partie au moins de la fente (17), au cours du déplacement de l'article (500) selon la direction de transfert (A).

8. Dispositif selon l'une des revendications 6 et 7, dans lequel le déflecteur (25) est agencé pour dévier le noeud (401) par rapport à l'article (500) au cours du déplacement de l'article (500) selon la direction de transfert (A).

9. Dispositif selon l'une des revendications 6 à 8, dans lequel la surface de travail (10) est portée par une pièce en forme générale de plaque, et le déflecteur (25) est conformé en une portion de la plaque décalée par rapport à un plan principal de la plaque.

10. Dispositif selon la revendication 9, dans lequel la fente (17) est en partie au moins ménagée dans la portion de la plaque décalée vers le second côté.

11. Dispositif selon l'une des revendications précédentes, comprenant en outre un distributeur (200) d'étiquettes (300), dans lequel la partie active du distributeur (200) se trouve au droit d'une partie au moins de la fente (17).

12. Dispositif selon l'une des revendications précédentes, comprenant un accès à une partie du lien (400) s'étendant entre le noeud (401) et l'article (500), l'accès se faisant transversalement à la direction de transfert (A).

13. Accessoire pour un dispositif de ficelage du type comprenant un organe de ficelage (103) activable pour placer au moins un lien (400) autour d'un article (500) en déplacement dans une direction de transfert (A), et un bec de nouage (55), l'accessoire étant adapté pour être assemblé au dispositif de manière à y former une surface de travail (10) fixe par rapport au reste du dispositif comprenant une ouverture (11) au moins partiellement conformée en une fente (17), de telle manière que l'organe de ficelage place le lien (400) autour de l'article (500) d'un premier côté de la surface de travail et amène une partie de ce lien (400) du second côté de la surface de travail en formant au moins une boucle, tandis que le bec de nouage (55) ferme la boucle par un noeud (401) du second côté de la surface de travail, la fente (17) s'étendant généralement selon la direction de transfert (A), la fente (17) étant agencée pour laisser passer une partie de la boucle mais maintenir le noeud (401) du second côté de la surface de travail (10) sur une partie au moins du déplacement de l'article (500) selon la direction de transfert (A).

14. Procédé d'étiquetage automatique, dans lequel on déplace, selon une direction de transfert (A), un article (500) d'un premier côté d'une surface de travail (10) fixe comprenant une ouverture (11) au moins partiellement conformée en une fente (17), on place au moins un lien (400) autour de l'article (500) du premier côté de la surface de travail (10) et l'on amène une partie de ce lien (400) du second côté de la surface de travail (10) en formant au moins une boucle, et l'on ferme la boucle par un noeud (401) du second côté de la surface de travail (10), dans lequel on laisse passer une partie de la boucle au travers de la fente (17), mais on maintient le noeud (401) du second côté de la surface de travail (10) grâce à ladite fente (17) lors d'une partie au moins du déplacement de l'article (500) selon la direction de transfert (A), tandis qu'on écarte l'article (500) de la fente (17) de manière à placer une étiquette (300) entre l'article (500) et le noeud (401).

## Patentansprüche

1. Bindevorrichtung des Typs umfassend:
- eine in Bezug auf den Rest der Vorrichtung feste Arbeitsfläche (10), umfassend eine Öffnung (11);
- ein aktivierbares Bindeglied (103) zum Anbringen mindestens eines Binders (400) um einen Artikel (500), der sich in einer Übertragungsrichtung (A) auf einer ersten Seite der Arbeitsfläche (10) bewegt, und zum Zuführen eines Teils dieses Binders (400) auf einer zweiten Seite der Arbeitsfläche (10) gegenüber der ersten Seite durch Bilden mindestens einer Schleife;
- einen Knüpfschnabel (55), der die Schleife durch einen Knoten (401) auf der zweiten Seite der Arbeitsfläche (10) schließen kann;
- wobei die Öffnung (11) zumindest teilweise zu einem Schlitz (17) ausgebildet ist, der sich im Allgemeinen in der Übertragungsrichtung (A) erstreckt und angeordnet ist, um einen Teil der Schleife durchzulassen, aber den Knoten (401) auf der zweiten Seite der Arbeitsfläche (10) auf mindestens einem Teil der Bewegung des Artikels (500) in der Übertragungsrichtung (A) zu halten.

2. Bindevorrichtung nach Anspruch 1, wobei die Arbeitsfläche (10) von einem im Wesentlichen horizontal angeordneten Arbeitstisch getragen wird und wobei die erste Seite der Arbeitsfläche (10) und die zweite Seite der Arbeitsfläche (10) jeweils über und unter dem Arbeitstisch übereinstimmen.

3. Vorrichtung nach einem der vorstehenden Ansprüche, wobei die Öffnung (11) einen vergrößerten Abschnitt (21) umfasst, in den sich der Schlitz (17) öffnet und der angeordnet ist, um den Knoten (401) durchzulassen, wobei der vergrößerte Abschnitt (21) von dem Knüpfschnabel (55) in der Übertragungsrichtung (A) entfernt ist.

4. Vorrichtung nach einem der vorstehenden Ansprüche, wobei sich der Schlitz (17) teilweise auf Höhe des Knüpfschnabels (55) erstreckt.

5. Vorrichtung nach einem der vorstehenden Ansprüche, wobei die Öffnung (11) ferner einen Durchgangsabschnitt (15) für den Binder (400) umfasst, und der Schlitz (17) den Durchgangsabschnitt (15) im Wesentlichen auf Höhe des Knüpfschnabels (55) erreicht.

6. Vorrichtung nach einem der vorstehenden Ansprüche, umfassend einen Ablenker (25), der angeordnet ist, um den Knoten von dem Artikel (500) wegzubewegen, wenn der Artikel (500) in der Übertragungsrichtung (A) bewegt wird, wenn der Knoten (401) auf der zweiten Seite der Arbeitsfläche (10) gehalten wird.

7. Vorrichtung nach Anspruch 6, wobei der Ablenker (25) angeordnet ist, um den Artikel (500) vom Knoten (401) auf Höhe von mindestens einem Teil des Schlitzes (17) während der Bewegung des Artikels (500) in der Übertragungsrichtung (A) abzulenken.

8. Vorrichtung nach einem der Ansprüche 6 und 7, wobei der Ablenker (25) angeordnet ist, um den Knoten (401) in Bezug auf den Artikel (500) während der Bewegung des Artikels (500) in der Übertragungsrichtung (A) abzulenken.

9. Vorrichtung nach einem der Ansprüche 6 bis 8, wobei die Arbeitsfläche (10) von einem im Allgemeinen plattenförmigen Teil getragen wird und der Ablenker (25) zu einem Abschnitt der Platte ausgebildet ist, der in Bezug auf eine Hauptebene der Platte versetzt ist.

10. Vorrichtung nach Anspruch 9, wobei der Schlitz (17) zumindest teilweise in dem Abschnitt der versetzten Platte zur zweiten Seite hin vorgesehen ist.

11. Vorrichtung nach einem der vorstehenden Ansprüche, ferner umfassend einen Spender (200) für Etiketten (300), wobei sich der aktive Teil des Spenders (200) auf Höhe von mindestens einem Teils des Schlitzes (17) befindet.

12. Vorrichtung nach einem der vorstehenden Ansprüche, umfassend einen Zugang zu einem Teil des Binders (400), der sich zwischen dem Knoten (401) und dem Artikel (500) erstreckt, wobei der Zugang quer zur Übertragungsrichtung (A) erfolgt.

13. Zubehör für eine Bindevorrichtung des Typs umfassend ein aktivierbares Bindeglied (103) zum Anbringen mindestens eines Binders (400) um einen Artikel (500), der sich in einer Übertragungsrichtung (A) bewegt, und einen Knüpfschnabel (55), wobei das Zubehör geeignet ist, mit der Vorrichtung zusammengebaut zu werden, um eine in Bezug auf den Rest der Vorrichtung feste Arbeitsfläche (10) zu bilden, die eine Öffnung (11) umfasst, die mindestens teilweise zu einem Schlitz (17) ausgebildet ist, derart, dass das Bindeglied den Binder (400) um den Artikel (500) auf einer ersten Seite der Arbeitsfläche anbringt und einen Teil dieses Binders (400) auf der zweiten Seite der Arbeitsfläche zuführt, indem mindestens eine Schleife gebildet wird, während der Knüpfschnabel (55) die Schleife mit einem Knoten (401) auf der zweiten Seite der Arbeitsfläche schließt, wobei sich der Schlitz (17) im Allgemeinen in der Übertragungsrichtung (A) erstreckt, wobei der Schlitz (17) angeordnet ist, um einen Teil der Schleife durchzulassen, aber den Knoten (401) auf der zweiten Seite der Arbeitsfläche (10) auf mindestens einem Teil der Bewegung des Artikels (500) in der Übertragungsrichtung (A) zu halten.

14. Verfahren zum automatischen Etikettieren, wobei ein Artikel (500) in einer Übertragungsrichtung (A) auf einer ersten Seite einer festen Arbeitsfläche (10) umfassend eine Öffnung (11), die zumindest teilweise zu einem Schlitz (17) ausgebildet ist, bewegt wird, mindestens ein Binder (400) um den Artikel (500) auf der ersten Seite der Arbeitsfläche (10) angebracht wird und ein Teil dieses Binders (400) auf der zweiten Seite der Arbeitsfläche (10) durch Bildung mindestens einer Schleife zugeführt wird, und die Schleife mit einem Knoten (401) auf der zweiten Seite der Arbeitsfläche (10) geschlossen wird, wobei ein Teil der Schleife durch den Schlitz (17) durchgelassen wird, aber der Knoten (401) auf der zweiten Seite der Arbeitsfläche (10) durch den Schlitz (17) während mindestens eines Teils der Bewegung des Artikels (500) in der Übertragungsrichtung (A) gehalten wird, während der Artikel (500) von dem Schlitz (17) wegbewegt wird, um ein Etikett (300) zwischen dem Artikel (500) und dem Knoten (401) anzubringen.

## Claims

1. A tying device of the type comprising:
- a work surface (10) fixed in relation to the rest of the device comprising an opening (11);
- a tying member (103) which is activatable so as to place at least one tie (400) around an article (500) which is moving in a direction of transfer (A) from a first side of the work surface (10) and so as to bring part of said tie (400) from a second side of the work surface (10) located opposite the first side thus forming at least one loop;
- a knotting lip (55) which is capable of closing the loop by means of a knot (401) on the second side of the work surface (10);
- wherein the opening (11) is configured at least partially as a slot (17) which extends generally in the direction of transfer (A) and which is arranged in order to allow part of the loop to pass through but to hold the knot (401) on the second side of the work surface (10) over at least part of the movement of the article (500) in the direction of transfer (A).

2. The tying device as claimed in claim 1, wherein the work surface (10) is supported by a work table which is arranged substantially horizontally and wherein the first side of the work surface (10) and the second side of the work surface (10) correspond respectively to the top and to the bottom of the work table.

3. The device as claimed in one of the preceding claims, wherein the opening (11) comprises an expanded portion (21) into which the slot (17) opens out and which is arranged in order to allow the knot (401) to pass through, the expanded portion (21) being at a spacing from the knotting lip (55) in the direction of transfer (A).

4. The device as claimed in one of the preceding claims, wherein the slot (17) extends in part to the right of the knotting lip (55).

5. The device as claimed in one of the preceding claims, wherein the opening (11) further comprises a passage portion (15) for the tie (400), and the slot (17) merges with the passage portion (15) substantially to the right of the knotting lip (55).

6. The device as claimed in one of the preceding claims, comprising a deflector (25) which is arranged in order to move the knot away from the article (500) during the movement of the article (500) in the direction of transfer (A), when the knot (401) is held by the second side of the work surface (10).

7. The device as claimed in claim 6, wherein the deflector (25) is arranged in order to deflect the article (500) with respect to the knot (401), to the right of at least part of the slot (17), during the movement of the article (500) in the direction of transfer (A).

8. The device as claimed in either of claims 6 and 7, wherein the deflector (25) is arranged in order to deflect the knot (401) with respect to the article (500) during the movement of the article (500) in the direction of transfer (A).

9. The device as claimed in one of claims 6 to 8, wherein the work surface (10) is supported by a part which is in the general form of a plate, and the deflector (25) is configured as a portion of the plate which is offset in relation to a main plane of the plate.

10. The device as claimed in claim 9, wherein the slot (17) is arranged at least in part in the portion of the plate which is offset toward the second side.

11. The device as claimed in one of the preceding claims, further comprising a distributor (200) of labels (300), wherein the active part of the distributor (200) is situated to the right of at least part of the slot (17).

12. The device as claimed in one of the preceding claims, comprising an access to part of the tie (400) which extends between the knot (401) and the article (500), the access being transversally to the direction of transfer (A).

13. An accessory for a tying device of the type comprising a tying member (103), which is activatable so as to place at least one tie (400) around an article (500) which is moving in a direction of transfer (A), and a knotting lip (55), the accessory being suitable so as to be assembled on the device in a manner so as to form a work surface (10) fixed in relation to the rest of the device thereon which comprises an opening (11) which is configured at least partially as a slot (17), in such a manner that the tying member places the tie (400) around the article (500) from a first side of the work surface and brings part of said tie (400) from the second side of the work surface thus forming at least one loop, whilst the knotting lip (55) closes the loop by means of a knot (401) on the second side of the work surface, the slot (17) extending in general in the direction of transfer (A), the slot (17) being arranged in order to allow part of the loop to pass through but to hold the knot (401) on the second side of the work surface (10) over at least part of the movement of the article (500) in the direction of transfer (A).

14. An automatic labeling method, wherein an article (500) is moved, in a direction of transfer (A), from a first side of a fixed work surface (10) which comprises an opening (11) which is configured at least in part as a slot (17), at least one tie (400) is placed around the article (500) from the first side of the work surface (10) and part of said tie (400) is brought from the second side of the work surface (10) thus forming at least one loop, and the loop is closed by means of a knot (401) on the second side of the work surface (10), wherein part of the loop is allowed to pass through the slot (17), but the knot (401) is held on the second side of the work surface (10) thanks to said slot (17) during at least part of the movement of the article (500) in the direction of transfer (A), whilst the article (500) is moved away from the slot (17) so that a label (300) is placed between the article (500) and the knot (401).
